# FASCICULE DE BREVET EUROPEEN

(11) **EP 0 668 041 B1**
(45) Date de publication et mention de la délivrance du brevet: **07.01.1998**
(21) Numéro de dépôt: 95400285.3
(22) Date de dépôt: 10.02.1995
(51) Int. Cl.: A47J 36/02

(54) **Ustensile culinaire et procédé de réalisation de cet ustensile**
Küchengerät und dessen Herstellung
Kitchen utensil and manufacturing thereof

(30) Priorité: 15.02.1994 FR 9401709
(43) Date de publication de la demande: 23.08.1995
(73) Titulaire: SEB S.A., 69130 Ecully (FR)
(72) Inventeur: Brasset, Jean-Francois, F-74960 Cran-Gevrier (FR); Maillard, Philippe, F-74150 Moye (FR)
(74) Mandataire: Keib, Gérard

(56) Documents cités:
- EP-A- 0 259 056
- EP-A- 0 510 546
- FR-A- 2 138 505
- FR-A- 2 688 426
- GB-A- 618 324
- US-A- 2 618 258

## Description

La présente invention concerne un ustensile culinaire et son procédé de réalisation.

L'invention vise en particulier à améliorer la surface d'un ustensile, adaptée à supporter des aliments.

Généralement, les surfaces destinées au contact alimentaire sont constituées d'un revêtement en polytétrafluoréthylène (PTFE) accroché sur une plaque en aluminium.

On connaît ainsi des ustensiles culinaires, et notamment des récipients de cuisson, dont le fond comporte une série de reliefs en forme d'alvéoles, répartis régulièrement sur la surface du fond. Ce type d'ustensile culinaire est décrit dans la demande de brevet français 92 03029 au nom de la Demanderesse. Ces motifs en relief, réalisés généralement par matriçage sur une plaque d'aluminium, puis par application d'un revêtement en PTFE, permettent notamment d'améliorer l'accrochage du revêtement sur la plaque en aluminium. Toutefois, ces motifs alvéolaires réguliers présentent une grande surface de contact avec les aliments et augmentent ainsi l'adhérence des aliments sur la surface de l'ustensile culinaire, contrairement à l'effet recherché.

On connaît par ailleurs des ustensiles culinaires dans lesquels la surface adaptée à supporter des aliments, recouverte d'un revêtement anti-adhésif, comporte un relief en creux et bosses, soit sous forme de sillons de profondeur et de largeur déterminées, comme dans le document EP-A-0 510 546, soit sous forme d'ondulations définissant des pics rapprochés, comme dans le document EP-A-0 259 056. Cependant, cette disposition régulière des reliefs induit une usure régulière de la surface destinée à recevoir les aliments, et diminue de ce fait les propriétés anti-adhésives de cette surface.

A titre de variante subsidiaire, le document EP-A-0 259 056 précité prévoit une surface rugueuse et irrégulière, mais dans laquelle les pics restent peu espacés et se trouvent sensiblement dans le même plan. L'inconvénient d'une telle disposition est que les sommets sont particulièrement exposés à une usure rapide du revêtement anti-adhésif; les aliments reposant sur une surface relativement plane constituée par les sommets, l'usure des sommets équivaut dans la pratique à une usure du récipient.

Le but de la présente invention est de résoudre les inconvénients précités et de prolonger notamment la durée de vie des ustensiles culinaires.

Selon l'invention, l'ustensile culinaire présentant une surface adaptée à supporter des aliments, ladite surface étant recouverte d'un revêtement anti-adhésif et comportant une série de bosses à sommet arrondi, séparées par une série de cavités, est caractérisé en ce que les bosses sont réparties de manière aléatoire sur ladite surface, les bosses étant de hauteurs inégales et le volume occupé par la série de cavités étant inférieur au volume occupé par la série de bosses.

Cette surface granitée telle que définie ci-dessus permet de manière surprenante d'améliorer la non-adhérence des aliments sur le fond.

Du fait des sommets arrondis des bosses situées sur le fond, les aliments glissent plus facilement sur la surface. Mais surtout, la distribution aléatoire des bosses sur la surface, celles-ci étant de hauteurs inégaies, a pour conséquence d'améliorer la résistance à l'usure de cette surface. Cette propriété est importante, notamment lorsque la surface est en aluminium, qui est relativement mou, et donc sensible aux rayures créées par des objets en métal plus dur. Grâce à ces reliefs aléatoires et de hauteurs différentes, la surface n'est rayée qu'en des points distincts répartis de manière irrégulière sur cette surface et nuisant peu à la qualité de non-adhérence de la surface de l'ustensile culinaire.

La surface de l'ustensile culinaire étant recouverte d'un revêtement anti-adhésif, la non-adhérence de cette surface est ainsi fortement améliorée.

Grâce à la série de bosses et de cavités, l'accrochage du revêtement est facilité.

L'usure du revêtement étant également aléatoire et ponctuelle, les propriétés de non-adhérence du revêtement ont une durabilité accrue.

Selon un autre aspect de l'invention, un procédé de réalisation d'un ustensile culinaire conforme à l'invention, est caractérisé en ce qu'il comprend préalablement à l'application du revêtement anti-adhésif les étapes suivantes:
a) on attaque par électroérosion une matrice en métal dur pour obtenir une série d'espaces en creux à fond arrondi, répartis de manière aléatoire sur ladite matrice et séparés par une série de reliefs, le volume occupé par la série de reliefs étant inférieur au volume occupé par la série d'espaces en creux;
b) on applique par frappe ladite matrice sur une plaque en métal moins dur que celui de la matrice pour imprimer en image inverse une série de bosses à sommet arrondi, réparties de manière aléatoire sur la plaque et séparées par une série de cavités, le volume occupé par la série de cavités étant inférieur au volume occupé par la série de bosses.

La réalisation des bosses et des cavités par matriçage sur une plaque permet de durcir la surface de cette plaque et de renforcer ainsi sa résistance à l'usure.

La traitement par électroérosion de la matrice permet non seulement de réaliser les motifs en creux et en reliefs (en image inverse des motifs que l'on souhaite réaliser sur la surface de la plaque matricée), mais aussi de réaliser des microcavités dans le métal adjacent aux creux, ce qui améliore l'accrochage du revêtement de PTFE sur la surface métallique.

D'autres particularités et avantages de l'invention apparaîtront encore dans la description ci-après.

Aux dessins annexés, donnés à titre d'exemples non limitatifs:
- la figure 1 est une vue schématique en coupe d'une première étape du procédé conforme à l'invention;
- la figure 2 est une vue schématique en coupe d'une deuxième étape du procédé conforme à l'invention;
- la figure 3 est une vue en coupe d'un ustensile culinaire conforme à l'invention; et
- la figure 4 est une vue agrandie en coupe d'un détail A à la figure 3.

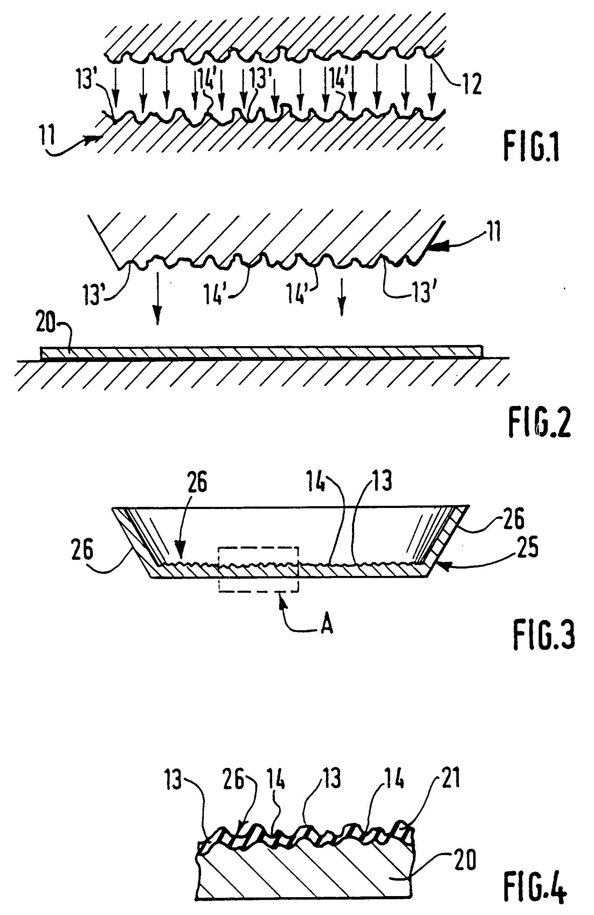

On va décrire tout d'abord un ustensile culinaire conforme à la présente invention, en référence aux figures 3 et 4.

L'ustensile culinaire comporte une surface 26 adaptée à supporter des aliments.

Dans l'exemple de réalisation illustré à la figure 4, l'ustensile constitue un récipient de cuisson 25, tel qu'une poêle, la surface 26 formant le fond du récipient 25. La surface 26 comporte une série de bosses 13 à sommet arrondi, réparties de manière aléatoire sur la surface 26 et séparées par une série de cavités 14.

Le volume occupé par la série de cavités 14 est inférieur au volume occupé par la série de bosses 13.

Le volume occupé par les bosses 13 est défini par le volume total des motifs faisant saillie sur la surface 26 et le volume occupé par les cavités 14 est défini par le volume des creux sous la surface 26.

La forme et la répartition des bosses 14 sont aléatoires et irrégulières. Ceci permet notamment de limiter l'usure de cette surface 26.

Les bosses 13 ont une hauteur comprise entre 0,01 et 0,2 mm, au-dessus de la surface 26.

Une même surface 26 comporte des bosses de hauteurs différentes, comprises dans l'intervalle précité.

Comme illustré plus en détail à la figure 4, le fond du récipient 25 est constitué d'une plaque 20 de métal, de préférence en aluminium. La surface 26 de cette plaque 20 est recouverte d'un revêtement 21 anti-adhésif, du type PTFE.

Le revêtement forme sur la surface 26 une couche sensiblement uniforme et épouse ainsi les bosses 13 et les cavités 14. On obtient ainsi une surface 26 avec un relief granité.

Selon un autre aspect de l'invention, et en référence avec les figures 1 et 2, on va décrire un procédé de réalisation d'un ustensile culinaire conforme à l'invention.

Dans une première étape, on attaque par électroérosion avec une forte intensité une matrice 11 en métal dur pour réaliser une série d'espaces en creux 13' à fond arrondi, répartis de manière aléatoire sur la matrice 11 et séparés par une série de reliefs 14', le volume occupé par la série de reliefs 14' étant inférieur au volume occupé par la série d'espaces en creux 13'.

Il apparaît clairement que les motifs ainsi gravés sur la matrice 11 sont une image inverse de ceux que l'on souhaite imprimer sur une plaque 26 par un matriçage ultérieur.

Lors de la phase d'électroérosion, on utilise une électrode métallique 12 qui a une surface comportant des reliefs et des creux inversés par rapport à la gravure que l'on souhaite former sur la matrice 11.

Cette électrode 12, comme illustré à la figure 1, est placée en regard de la matrice 11 et est portée à haute tension.

Des micro-arcs électriques se forment entre l'électrode 12 et la matrice 11, créant dans la matrice 11 les creux 13' séparés par les reliefs 14'.

On sait en outre que ce procédé permet de créer également des microcavités dans le métal adjacent aux creux 13', les dimensions de ces microcavités pouvant être réglées en variant la tension appliquée à l'électrode 12.

La matrice 11 est de préférence en acier de manière à être suffisamment résistante pour matricer un très grand nombre de plaques.

Dans la seconde étape du procédé conforme à l'invention, on applique par frappe (voir figure 2), la matrice 11 sur une plaque 20 en métal moins dur que celui de la matrice 11 pour imprimer en image inverse une série de bosses 13 à sommet arrondi, réparties de manière aléatoire sur la plaque 20 et séparées par une série de cavités 14. Le volume occupé par la série de cavités 14 est inférieur au volume occupé par la série de bosses 13.

Cette opération de matriçage est une frappe à froid, sous une charge de 500 à 2000 tonnes.

On imprime ainsi sur la plaque 20 les motifs de la matrice 11 ainsi que les microcavités réalisées par électroérosion.

Ces microcavités présentent l'avantage d'assurer un meilleur accrochage d'un revêtement anti-adhésif sur la surface 26.

La plaque 20 est emboutie en forme de récipient 25 après cette étape de matriçage.

Dans cet exemple de réalisation, le fond du récipient 25 et la matrice 11 ont une forme de disque. Seule la surface 26 du fond du récipient comporte un relief granité, les parois 27 du récipient 25 étant sensiblement lisses.

Après emboutissage, on applique sur la surface 26, ainsi que sur les parois 27 du récipient, un revêtement 21 en polytétrafluoréthylène.

La plaque 20 est de préférence en aluminium, qui est un métal relativement mou pouvant être aisément matricé par une matrice 11 en acier.

La surface 26 présente ainsi au contact des aliments un relief granité en PTFE qui permet de limiter au mieux l'adhérence des aliments sur le fond du récipient 25.

Bien entendu, l'invention n'est pas limitée à l'exemple décrit ci-dessus et de nombreuses modifications peuvent être apportées à celui-ci sans sortir du cadre de l'invention.

Ainsi, l'ustensile culinaire peut être une plaque de cuisson plane.

De plus, l'ensemble de la surface intérieure du récipient peut comporter une série de bosses séparées par des cavités conformes à l'invention.

## Revendications

1. Ustensile culinaire présentant une surface adaptée à supporter des aliments, ladite surface étant recouverte d'un revêtement anti-adhésif et comportant une série de bosses à sommet arrondi, séparées par une série de cavités, caractérisé en ce que les bosses (13) sont réparties de manière aléatoire sur ladite surface (26), les bosses étant de hauteurs inégales et le volume occupé par la série de cavités (14) étant inférieur au volume occupé par la série de bosses (13).

2. Ustensile culinaire conforme à la revendication 1, caractérisé en ce que les bosses (13) ont une hauteur comprise entre 0,01 et 0,2 mm.

3. Ustensile culinaire conforme à l'une des revendications 1 ou 2, caractérisé en ce que le revêtement (21) anti-adhésif est du polytétrafluoréthylène.

4. Ustensile culinaire conforme à l'une des revendications 1 à 3, caractérisé en ce qu'il constitue un récipient de cuisson (25), ladite surface (26) formant le fond du récipient (25).

5. Procédé de réalisation d'un ustensile culinaire conforme à la revendication 1, caractérisé en ce que, préalablement à l'application du revêtement anti-adhésif, on procède aux étapes suivantes:
a) On attaque par électroérosion une matrice (11) en métal dur pour obtenir une série d'espaces en creux (13') à fond arrondi et de profondeurs inégales, répartis de manière aléatoire sur ladite matrice (11) et séparés par une série de reliefs (14'), le volume occupé par la série de reliefs (14') étant inférieur au volume occupé par la série d'espaces en creux (13');
b) on applique par frappe ladite matrice sur une plaque (20) en métal moins dur que celui de la matrice (11) pour imprimer en image inverse une série de bosses (13) à sommet arrondi et de hauteurs inégales, réparties de manière aléatoire sur la plaque (20) et séparées par une série de cavités (14), le volume occupé par la série de cavités (14) étant inférieur au volume occupé par la série de bosses (13).

6. Procédé conforme à la revendication 5, caractérisé en ce que la plaque (20) est emboutie en forme de récipient (25) après l'étape b).

7. Procédé conforme à l'une des revendications 5 ou 6, caractérisé en ce qu'on applique sur la plaque (20), après l'étape b), un revêtement (21) en polytétrafluoréthylène.

8. Procédé conforme à l'une des revendications 5 à 7, caractérisé en ce que la matrice (11) est en acier.

9. Procédé conforme à l'une des revendications 5 à 8, caractérisé en ce que la plaque (20) est en aluminium.

## Claims

1. A cooking utensil having a surface adapted to support food, said surface being covered by a non-stick coating and comprising a number of humps having rounded tops and separated by a series of cavities, characterised in that the humps (13) are distributed in random manner over the said surface (26), the humps being of unequal heights and the volume occupied by the series of cavities (14) being less than the volume occupied by the series of humps (13).

2. A cooking utensil according to claim 1, characterised in that the humps (13) have a height between 0.01 and 0.2 mm.

3. A cooking utensil according to claim 1 or 2, characterised in that the non-stick coating (21) is polytetrafluoroethylene.

4. A cooking utensil according to any of claims 1 to 3, characterised in that it is a cooking vessel (25), the said surface (26) forming the base of the vessel (25).

5. A method of manufacturing a cooking utensil according to claim 1, characterised by the following steps prior to application of the non-stick coating:
(a) a hard metal die (11) is eroded by electro-erosion to obtain a series of hollow spaces (13') with round bottoms and of unequal depths, distributed in random manner over the die (11) and separated by a series of raised portions (14'), the volume occupied by the series of raised portions (14') being less than the volume occupied by the series of hollow spaces (13');
(b) the die is applied by stamping on to a plate (20) of metal less hard than the die (11), so as to impress a reverse image in the form of a series of humps (13) having rounded tops and of unequal height distributed in random manner over the plate (20) and separated by a series of cavities (14), the volume occupied by the series of cavities (14) being less than the volume occupied by the series of humps (13).

6. A method according to claim 5, characterised in that the plate (20) is pressed in the shape of the vessel (25) after the step (b).

7. A method according to claim 5 or 6, characterised in that a polytetrafluoroethylene coating (21) is applied to the plate (20) after the step (b).

8. A method according to any one of claims 5 to 7, characterised in that the die (11) is of steel.

9. A method according to any of claims 5 to 8, characterised in that the plate (20) is of aluminium.

## Patentansprüche

1. Küchengerät mit einer Fläche, die zum Halten von Lebensmitteln geeignet ist, wobei die Fläche mit einer Antihaftbeschichtung überdeckt ist und eine Reihe von Erhebungen mit abgerundetem Scheitel aufweist, die durch eine Reihe von Hohlräumen getrennt sind, dadurch gekennzeichnet, daß die Erhebungen (13) zufällig auf der Fläche (26) verteilt sind, wobei die Erhebungen ungleich hoch sind und das von der Reihe von Hohlräumen (14) eingenommene Volumen kleiner als das von der Reihe von Erhebungen (13) eingenommene Volumen ist.

2. Küchengerät nach Anspruch 1, dadurch gekennzeichnet, daß die Erhebungen (13) eine Höhe zwischen 0,01 und 0,2 mm besitzen.

3. Küchengerät nach einem der Ansprüche 1 oder 2, dadurch gekennzeichnet, daß die Antihaftbeschichtung (21) aus Polytetrafluorethylen besteht.

4. Küchengerät nach einem der Ansprüche 1 bis 3, dadurch gekennzeichnet, daß es ein Kochgefäß (25) bildet, wobei die Fläche (26) den Boden des Gefäßes (25) bildet.

5. Verfahren zur Herstellung eines Küchengeräts nach Anspruch 1, dadurch gekennzeichnet, daß vor dem Aufbringen der Antihaftbeschichtung folgende Schritte ausgeführt werden:
a) eine Matrix (11) aus Hartmetall wird durch Funkenerosion angegriffen, um eine Reihe von Vertiefungen (13') mit abgerundetem Boden und ungleichen Tiefen zu erhalten, die zufällig auf der Matrix (11) verteilt und durch eine Reihe von Erhöhungen (14') getrennt sind, wobei das von der Reihe von Erhöhungen (14') eingenommene Volumen kleiner als das von der Reihe von Vertiefungen (13') eingenommene Volumen ist;
b) die Matrix wird durch Schlagen auf eine Platte (20) aus einem weniger harten Metall als demjenigen der Matrix (11) aufgebracht, um im umgekehrten Bild eine Reihe von Erhebungen (13) mit abgerundetem Scheitel und ungleichen Höhen zu bilden, die zufällig auf der Platte (20) verteilt und durch eine Reihe von Hohlräumen getrennt sind, wobei das von der Reihe von Hohlräumen (14) eingenommene Volumen kleiner als das von der Reihe von Erhebungen (13) eingenommene Volumen ist.

6. Verfahren nach Anspruch 5, dadurch gekennzeichnet, daß die Platte (20) nach dem Schritt b) in Form eines Gefäßes (25) tiefgezogen wird.

7. Verfahren nach einem der Ansprüche 5 oder 6, dadurch gekennzeichnet, daß nach dem Schritt b) auf die Platte (20) eine Beschichtung (21) aus Polytetrafluorethylen aufgebracht wird.

8. Verfahren nach einem der Ansprüche 5 bis 7, dadurch gekennzeichnet, daß die Matrix (11) aus Stahl besteht.

9. Verfahren nach einem der Ansprüche 5 bis 8, dadurch gekennzeichnet, daß die Platte (20) aus Aluminium besteht.
